# EUROPÄISCHE PATENTSCHRIFT

(11) **EP 3 900 584 B1**
(45) Veröffentlichungstag und Bekanntmachung des Hinweises auf die Patenterteilung: **07.06.2023**
(21) Anmeldenummer: 21164019.8
(22) Anmeldetag: 22.03.2021
(51) Int. Cl.: A47J 37/07, A47J 37/08

(54) **GRILLGERÄT**
BARBECUE
RÔTISSOIRE

(43) Veröffentlichungstag der Anmeldung: 27.10.2021
(73) Patentinhaber: Walter Werkzeuge Salzburg GmbH, 5081 Anif (AT)
(72) Erfinder: ROTHENBERGER, Helmut, 60323 Frankfurt am Main (DE)
(74) Vertreter: Schwarz & Partner Patentanwälte GmbH

(56) Entgegenhaltungen:
- WO-A1-2019/068202
- FR-A1- 2 763 233
- KR-U- 20090 013 113
- KR-Y1- 200 468 711
- US-A1- 2015 053 093
- US-B1- 10 278 540

## Beschreibung

Die Erfindung betrifft ein Grillgerät zum Garen und Grillen von Grillgut, umfassend ein Gehäuse, welches den Grillinnenraum begrenzt und eine erste Seitenwand, eine zweite Seitenwand, die der ersten Seitenwand gegenüberliegt, eine Deckenwand, eine Rückwand und eine Bodenplatte aufweist, wobei der Grillinnenraum einen vertikalen Grillbereich aufweist, zumindest zwei Heizstrahler, welche gegenüberliegend an der ersten und zweiten Seitenwand im Grillinnenraum eingebracht sind, wobei die Heizstrahler vorzugsweise Gasbrenner sind, einen Grillkorb, welcher vertikal zwischen den beiden Heizstrahlern einbringbar ist, wobei die Deckenwand eine Öffnung aufweist, durch welche der Grillkorb in den Grillinnenraum einbringbar ist.

### HINTERGRUND DER ERFINDUNG

Oberhitze-Grillgeräte erlauben aufgrund der hohen Temperaturen bis zu 800 °C besondere Geschmacksaromen und ein Grillgut, das innen zart und saftig bleibt, während an der Außenseite eine perfekte Kruste entsteht. Allerdings wird das Grillgut bei Oberhitze-Grillgeräten immer nur einseitig mit der großen Hitze gegart und nur durch Wenden des Grillguts wird eine beidseitig perfekte Kruste ermöglicht. Dabei kommt es jedoch zu einem ungewollten Nachgaren der bereits gegrillten Seite. Ein perfektes Ergebnis kann daher nur mit einem zeitgleichen Garen von beiden Seiten erzielt werden.

Vertikal-Grillgeräte ermöglichen eine solche beidseitige perfekte Kruste, indem das Grillgut von beiden Seiten zeitgleich mit großer Hitze gegart wird. Im Stand der Technik sind Vertikal-Grillgeräte mit unterschiedlich betriebenen Wärmequellen bekannt.

In DE 20 2020 001 708 U1 wird ein gasbetriebenes Vertikal-Grillgerät offenbart, bei welchem die vertikalen Hitzequellen an einer Rückwand montiert sind und um 90° verdreht werden können. Somit kann einerseits Grillgut beidseitig gegrillt werden und andererseits das Grillgerät als Oberhitze-Grill verwendet werden. Das Grillgerät weißt jedoch kein Gehäuse auf, weshalb viel Wärme verloren geht.

In DE 20 2018 105 879 U1 wird ein gasbetriebenes Vertikal-Grillgerät offenbart, das in einer V-Form angeordnete, gegenüberliegende Brennerelemente umfasst, wobei das Grillgut von der Oberseite in den Grillinnenraum eingebracht werden kann. Die Oberseite kann mittels Kaminabschlussblechen geschlossen werden, um somit die Wärmeregulierung im Grillraum zu steuern und einen Kamineffekt zu unterdrücken. Durch Schließen des Grillinnenraums kann keine Wärme entweichen und somit über längere Zeit ein konstantes und sehr hohes Temperaturniveau gehalten werden.

Ein ähnliches elektrisches Vertikal-Grillgerät ist auch aus EP 2 557 974 B1 bekannt, welches ebenfalls ein geschlossenes Gehäuse umfasst, in das von oben das Grillgerät in einem Grillkorb vertikal eingebracht werden kann. Dabei soll das Fett vom Grillgut während des Garens möglichst effizient entfernt werden. Das Dokument WO 2019/068202 offenbart ein weiteres Grillgerät.

Die bekannten Vertikal-Grillgeräte weisen somit einerseits den Nachteil auf, dass das Grillgut während des Grillens nicht beobachtet werden kann. Um ein perfektes Ergebnis zu erzielen muss das Grillgut daher öfter aus dem Grillgerät entnommen werden, um den Grillfortschritt zu begutachten. Bei zu später Inspektion des Grillguts kann es leicht zu ungewollten Verbrennungen der äußeren Schicht kommen.

Andererseits wird bei bekannten Vertikal-Grillgeräten das Grillgut nur mittels der seitlichen Hitzequellen gegrillt, wodurch zumeist ein Vor- und/oder Nachgaren des Grillguts notwendig ist. Die bekannten Grillgeräte erlauben kein günstiges Grill-Klima für das Vor- bzw. Nachgaren, weshalb hierfür zumeist ein weiteres Gerät notwendig ist, um ein perfektes Ergebnis zu erreichen.

### KURZE BESCHREIBUNG DER ERFINDUNG

Der Erfindung liegt daher die Aufgabe zugrunde, ein flexibles und überall einsetzbares Vertikal-Grillgerät bereitzustellen, mit welchem das gewünschte Grillgut fehlerfrei und auf sehr einfache Weise perfekt zubereitet werden kann.

Gelöst wird diese Aufgabe durch ein Grillgerät zum Garen und Grillen von Grillgut, umfassend
- ein Gehäuse, welches den Grillinnenraum begrenzt und eine erste Seitenwand, eine zweite Seitenwand, die der ersten Seitenwand gegenüberliegt, eine Deckenwand, eine Rückwand und eine Bodenplatte aufweist, wobei der Grillinnenraum einen vertikalen Grillbereich aufweist,
- zumindest zwei Heizstrahler, welche gegenüberliegend an der ersten und zweiten Seitenwand im Grillinnenraum eingebracht sind, wobei die Heizstrahler vorzugsweise Gasbrenner sind,
- einen Grillkorb, welcher vertikal zwischen den beiden Heizstrahlern einbringbar ist,
wobei die Deckenwand eine Öffnung aufweist, durch welche der Grillkorb in den Grillinnenraum einbringbar ist, wobei die Frontseite des Grillgeräts eine Sichtöffnung umfasst.

Gemäß der Erfindung ist vorgesehen, dass der Grillkorb mit Grillgut in den Grillinnenraum durch die Öffnung an der Deckenwand eingebracht wird. Bevorzugt wird der Grillkorb derart am Gehäuse aufgenommen, dass er im Wesentlichen zentral zwischen den beiden Heizstrahlern positionierbar ist. Somit kann das Grillgut gleichmäßig von beiden Seiten mit den Heizstrahlern gegrillt werden. Zusätzlich ergibt sich aufgrund des Aufbaus des Grillgeräts ein Kamineffekt im Grillinnenraum, welcher eine Zirkulation von Heißluft rund um das Grillgut bewirkt. Durch die Sichtöffnung an der Frontseite des Grillgeräts, kann zusätzlich Frischluft in den Grillinnenraum gelangen, welche im Bereich der Heizplatten stark erhitzt wird und somit aufsteigt. Die erhitze Luft kann an der Öffnung der Deckenwand austreten, wodurch ein Unterdruck im Grillinnenraum entsteht, welcher wiederum frische Luft von der Öffnung an der Frontseite in den Grillinnenraum zieht. Dadurch zirkuliert ständig erhitzte Luft um das Grillgut, welches zugleich mittels großer Hitze beidseitig durch die Heizstrahler und mittels zirkulierender Heißluft gegrillt wird. Beispielsweise bei einem Steak werden somit durch die große Hitze die Poren instantan geschlossen, wodurch der Saft im Grillgut verbleibt. Zudem muss das Grillgut aber auch nicht vorbehandelt werden, da die zirkulierende Heißluft das Grillgut bzw. Steak ebenfalls gart. Beispielsweise kann nach dem Verschließen der Poren durch das sehr heiße Angrillen bei mehr als 800°C die Temperatur der Heißstrahler reduziert werden und das Grillgut mithilfe der zirkulierenden Heißluft fertig gegart werden. Mit dem erfindungsgemäßen Grillgerät kann auch voluminöseres Grillgut zubereitet werden, ohne dessen äußere Schicht zu verbrennen. Durch die zirkulierende Heißluft kann die Hitze auch ins Innere vordringen, ohne dass die Heizstrahler die äußere Schicht verbrennen.

Durch die Sichtöffnung an der Frontseite des erfindungsgemäßen Grillgeräts lässt sich das Grillgut während dem Grillen ständig beobachten. Somit lässt sich die Temperatur sehr einfach durch Sichtkontrolle regulieren und ein Verbrennen des Grillguts kann einfach verhindert werden. Zusammengefasst kann das Grillgut während des gesamten Grillvorgangs im Grillgerät verbleiben. Durch die visuelle Verfolgung der Garung reduziert sich auch die Gefahr von Verletzungen, im Speziellen Verbrennungen, von Personen, welche das Grillgerät bedienen, da diese während des Grillens nicht mit dem Grillgut hantieren müssen.

Besonders bevorzugt ist die Sichtöffnung derart ausgeführt, dass das Grillgut im Grillinnenraum während des Grillens durch die Sichtöffnung von beiden Seiten begutachtet werden kann. Dies wird unter anderem durch die vertikale Anbringung des Grillkorbs ermöglicht, dessen lange Seiten im Wesentlichen vertikal auf die Frontseite des Grillgeräts stehen oder im Wesentlichen parallel zu den Heizstrahlern verlaufen, sodass sich das Grillgut zwischen den beiden Heizstrahlern befindet. Das in den Grillkorb eingebrachte Grillgut kann daher von der Frontseite von beiden Seiten betrachtet werden. Somit wäre in dieser Ausführungsvariante die Sichtöffnung an der Frontseite vor dem eingebrachten Grillgut positioniert.

In einer weiteren Ausführungsvariante kann durch die Sichtöffnung in den Grillinnenraum eingegriffen werden. Die Sichtöffnung kann zum Beispiel derart ausgeführt sein, dass der Grillinnenraum durch die Sichtöffnung bei Nichtbenutzung des Grillgeräts gereinigt werden kann. In dieser Ausführungsform ist die Sichtöffnung an der Frontseite groß genug, dass ein Benutzer des Grillgeräts durch die Sichtöffnung mit der Hand in den Grillinnenraum gelangen kann, um eine Reinigung des Grillinnenraums durchführen zu können. Die Frontseite des Grillgeräts kann beispielsweise zum Großteil offen sein, sodass sich die Sichtöffnung im Wesentlichen über die gesamte Frontseite erstreckt.

Das Grillgerät kann die Form eines Quaders aufweisen, wobei die Seitenwände länger als die Front- und Rückseite des Grillgeräts ausgeführt sind.

Bei dem Grillkorb handelt es sich im Wesentlichen um zwei gegenüberliegende Grillroste, welche an der Oberseite gebogen sein können, um so auf der Außenseite der Deckenwand aufliegen zu können. Der Grillkorb kann auch einen oder zwei Griffe an der Oberseite aufweisen, mittels welchem der Korb einfach in den Grillinnenraum eingesetzt und wieder entnommen werden kann. Die Grillroste sind je nach Grillgut-Dicke im Wesentlichen parallel oder V-förmig angeordnet. An der Unterseite des Grillkorbs sind die beiden Grillroste miteinander verbunden, sodass das Grillgut nicht herausfällt.

Besonders bevorzugt lässt sich die Breite des Grillkorbs verstellen. Dadurch kann unterschiedlich dickes Grillgut in den Grillkorb eingebracht werden. Die Breite wird dabei über die Verbindung der Grillroste an der Unterseite des Grillkorbs eingestellt. Die Verstellung der Breite kann stufenlos oder in mehreren Stufen erfolgen.

In einer weiteren bevorzugten Ausführungsvariante weist der Grillkorb eine nach oben geschweifte V-Form auf. Somit kann Grillgut vertikal in den Grillkorb eingebracht werden, während die an der Oberseite geschweifte V-Form des Grillkorbs ermöglicht, dass während des Grillens des Grillguts im Grillgerät Brot oder dergleichen horizontal auf der Oberseite geröstet oder warmgehalten wird. Dabei kann das Brot auf der Oberseite des Grillgeräts am Grillkorb aufliegen und über der Öffnung an der Deckenwand positioniert werden. Dadurch strömt ständig heiße Luft um das Brot. Ähnlich einem Backrohr kann somit das Brot oder dergleichen mithilfe der Heißluft geröstet, aufgebacken oder warmgehalten werden.

In einer Ausführungsvariante umfasst das Grillgerät eine schwenkbare Frontklappe. Beispielsweise kann die Frontklappe mit einem Scharnier an der Bodenplatte schwenkbar befestigt angebracht sein. Die Drehachse des Scharnies ist dabei im Wesentlichen horizontal ausgerichtet. Mit der Frontklappe kann die Sichtöffnung verschlossen werden.

Die Frontklappe kann geschlossen werden, um das Grillgerät sicher aufzubewahren und das Eindringen von Schmutz zu vermeiden. In einer Ausführungsvariante ist vorgesehen, dass die Frontklappe mittels eines Magnetverschlusses am Außengehäuse verschließbar ist. Weiters kann die Frontklappe im geöffnete Zustand eine Verlängerung der Bodenplatte bilden. Dadurch bietet die Frontklappe einen Schutz vor der Strahlungswärme aus dem Grillinnenraum, welche, anstatt direkt auf die Tischplatte zu treffen, auf die Frontklappe trifft. Erleichtert wird dies, wenn die Frontklappe einen Griff aufweist, wobei die Tiefe des Griffs im Wesentlichen dem Abstand der Drehachse des Scharniers vom Boden entspricht.

Bevorzugt umfasst die Frontklappe eine Sichtscheibe aus vorzugsweise transparentem Kunststoff oder Glas. Die Sichtscheibe erlaubt auch bei geschlossener Frontseite einen Einblick in das Grillgerät und somit eine Überwachung des Grillguts. Es kann auch die gesamte Frontklappe transparent ausgeführt sein, beispielsweise in Form einer gläsernen Frontklappe. Zudem lässt sich eine gläserne Frontklappe oder Sichtscheibe sehr leicht reinigen.

In einer weiteren Ausführungsvariante umfasst das Grillgerät eine am Gehäuse angebrachte Frontverkleidung, welche an der Oberseite eine Blende umfassen kann und eine Öffnung aufweist. An der Unterseite der Frontverkleidung kann die klappbare Frontklappe angebracht sein. Bevorzugt kann die Frontklappe die gesamte Sichtöffnung abdecken, sodass das Grillgerät geschlossen gelagert werden kann bzw. auch bei geschlossener Frontklappe gegrillt werden kann.

In einer weiteren Ausführungsvariante umfasst das Grillgerät eine herausnehmbare Abtropfschale, wobei die Abtropfschale auf der Bodenplatte platzierbar ist. Da beim vertikalen Grillen des Grillguts Säfte und Fette herabtropfen, bietet die herausnehmbare Abtropfschale den Vorteil einer leichten Reinigung nach dem Grillen. Bevorzugt kann die Schale in der Geschirrspülmaschine gereinigt werden. Der Grillinnenraum bleibt somit vor gröberen Verschmutzungen verschont und muss nicht nach jeder Verwendung aufwändig gereinigt werden. Außerdem können die in der Abtropfschale aufgefangen Säfte und Fette auch zur Zubereitung von beispielsweise Saucen weiterverwendet werden.

Bevorzugt befinden sich im Grillinnenaum ein Paar im Wesentlichen horizontal ausgerichteter Führungen, welche an der ersten und zweiten Seitenwand jeweils auf gleicher Höhe unterhalb der Heizstrahler angeordnet sind. An diesen Führungen kann ein weiterer Grillrost angebracht werden, auf welchem bei geringerer Hitze Speisen gegart bzw. warmgehalten werden können. Beispielsweise kann das Grillgut auch nach der Zubereitung wiederum in das Grillgerät eingebracht werden und die Heizstrahler ausgeschalten werden. Indem die Frontklappe geschlossen wird, kann Wärme im Grillgerät verbleiben und das Grillgut warmgehalten werden. Die Führungen können dabei z.B. Schienen sein.

In einer besonders bevorzugten Ausführungsvariante handelt es sich bei den Heizstrahlern um Gasbrenner. Diese sind jeweils mit einer Gaszuleitung verbunden, wobei jede Gaszuleitung einen Anschluss für eine Gaskartusche aufweist, wobei die Gaskartuschen an der Außenseite der Rückwand des Gehäuses anordenbar sind. Die Gaszuleitungen können durch ein Ventil geöffnet und geschlossen werden. Bevorzugt verlaufen die Gaszuleitungen seitlich entlang des Grillgeräts von den Heizstrahlern bis zum jeweiligen Anschluss. Die Verwendung der Gaskartuschen erlaubt den flexiblen Transport des Grillgeräts, ohne ständig eine Gasflasche anzuschließen und abzumontieren. Außerdem kann das Grillgerät mit Gaskartuschen auch in Innenräumen verwendet werden. Bei den Gaskartuschen kann es sich in einer Ausführungsvariante um Multigaskartuschen handeln.

In einer Ausführungsvariante ist vorgesehen, dass jeder Anschluss ein Anschlussventil für die Gaskartuschen aufweist, welcher mit der Gaszuleitung verbunden ist. Bevorzugt ist dabei vorgesehen, dass jeder Anschluss direkt hinter der Deckenwand sitzt.

An der Unterseite der Deckenwand im Bereich hinter der Rückwand kann eine Anschlussplatte zur Befestigung der Anschlüsse für die Gaskartuschen angebracht sein. Zusätzlich können die zumindest zwei Gaskartuschen durch Löcher in der Bodenplatte hinter der Rückseite der Rückwand geschoben werden und so am Anschluss fixiert werden, wobei die Löcher in der Bodenplatte nach der Fixierung der Gaskartuschen mittels Bodenhalterungen schließbar sind. Die Gaskartuschen sind dann stabil hinter der Rückwand befestigt und können zusätzlich noch jeweils mit einer an der Bodenplatte angebrachten Abdeckblende abgeschirmt werden.

Weiters kann die Gaszufuhr an die Heizstrahler durch einen Regler geregelt werden, wobei der Regler die aus den Gaskartuschen durchgelassene Gasmenge zum Gasbrenner regelt. Dabei kann sich die zumindest eine Gaszuleitung durch ein Ventil öffnen und schließen lassen und ein nachgeschalteter Drehschalter zusätzlich die an den Heizstrahler durchgelassene Gasmenge regulieren. Mithilfe des Reglers bzw. des Drehschalters lässt sich somit die Grill-Temperatur einstellen. Gegebenenfalls lässt sich die Gasmenge auch mithilfe des Anschlussventils regeln bzw. die Gaszufuhr kann mithilfe des Anschlussventils ein- und ausgeschaltet werden.

In einer weiteren Ausführungsvariante umfasst das Gehäuse des Grillgeräts eine abnehmbare Abdeckung, welche an der Rückseite des Grillgeräts angebracht werden kann. Zwischen der Rückwand und der Abdeckung können die Gaskartuschen angeordnet werden. Somit können die Gaskartuschen sicher verbaut werden, um einen leichteren Transport des Grillgeräts zu ermöglichen. Unabhängig von der abnehmbaren Abdeckung können die Gaskartuschen bevorzugt auf der Bodenplatte des Gehäuses, welche daher über die Rückwand hinausragt, stehen, sofern sie noch nicht an das Grillgerät angeschlossen sind.

Die eben beschriebene Verbauung und Verwendung der Gaskartuschen erlaubt daher den flexiblen Transport des Grillgeräts, ohne ständig eine Gasflasche anzuschließen und abzumontieren. Außerdem kann das Grillgerät mit Gaskartuschen auch in Innenräumen verwendet werden.

Bevorzugt erfolgt die Zündung der Heizstrahler elektrisch per Knopfdruck, wobei die Zündvorrichtung beispielsweise eine Piezozündung ist. Jeder der beiden Heizstrahler kann eine Zündvorrichtung umfassen, welche jeweils einen der Heizstrahler zündet. Der Schalter bzw. Druckknopf für die elektrischen Zündvorrichtungen befindet sich bevorzugt an der Außenseite des Gehäuses, beispielsweise an der Rückseite des Grillgeräts. Besonders bevorzugt ist der Schalter bzw. Druckknopf in den Regler integriert. Dadurch können beide Heizstrahler einfach durch Drücken des Reglers gezündet werden. Es können auch zwei Schalter vorgesehen sein, welche jeweils einen der Heizstrahler zünden.

In einer weiteren Ausführungsvariante kann das Gehäuse zusätzliche Lüftungsöffnungen aufweisen. Einerseits können durch diese Verbrennungsgase, Qualm oder Rauch aus dem Grillinnenraum entweichen und andererseits können diese den Kamineffekt unterstützen. Beispielsweise bei geschlossener Frontklappe kann durch die Lüftungsöffnungen Frischluft in den Grillinnenraum gelangen. Die Lüftungsöffnungen können in Form von Lüftungsschlitzen ausgeführt sein.

Außerdem kann das Grillgerät einen integrierten Zeitschalter zur punktgenauen Zubereitung des Grillguts umfassen. Der Zeitschalter kann zusätzlich die Heizstrahler aktivieren bzw. deaktivieren, um eine zu lange Hitzezufuhr auf das Grillgut zu vermeiden.

Um ein möglichst einfaches Transportieren des Grillgeräts zu ermöglichen, kann sich an der Außendeckenwand ein Tragegriff befinden.

In einer weiteren Ausführungsvariante umfasst das Grillgerät ein Außengehäuse, welches die Sichtöffnung frei lässt. Das Außengehäuse kann zwei Außenseitenwände, eine Außendeckenwand und eventuell eine Außenrückwand umfassen. Weiters kann am Außengehäuse eine Frontverkleidung angebracht sein, welche an der Oberseite eine Blende umfasst. An der Unterseite der Frontverkleidung kann die klappbare Frontklappe angebracht sein. Auch eine mögliche Frontverkleidung lässt die Sichtöffnung offen.

Wenn das Außengehäuse eine Außenrückwand umfasst, ist diese hinter der Rückwand angeordnet. Die beiden Anschlüsse für die Gaskartuschen können dann zwischen Außenrückwand und Rückwand angeordnet sein oder sie können hinter der Außenrückwand angeordnet sein.

Eine weitere Ausführungsvariante sieht zumindest ein lösbar fixierbares Brenneisen vor. Das Brenneisen kann an einem der Heizstrahler fixierbar sein. Das Brenneisen kann ein Logo, einen Schriftzug, Ziffern, Buchstaben oder Kombinationen daraus aufweisen. Mithilfe des Brenneisens können Muster oder Namen bzw. Wörter in das Grillgut eingebrannt werden. Damit lässt sich beispielsweise ein personalisiertes Steak mithilfe der Brenneisen zubereiten. Das Brenneisen kann z.B. mittels einer Führung zum Grillkorb hin- und vom Grillkorb wegbewegt werden.

### AUSFÜHRLICHE BESCHREIBUNG DER ERFINDUNG

Weitere Vorteile und Details der Erfindung werden nachfolgend anhand der folgenden Figuren und Figurenbeschreibungen erläutert.
- Fig. 1: zeigt eine perspektivische Ansicht eines erfindungsgemäßen Grillgeräts.
- Fig. 2: zeigt eine perspektivische Ansicht des erfindungsgemäßen Grillgeräts mit geschlossener Frontklappe.
- Fig. 3: zeigt eine Draufsicht des erfindungsgemäßen Grillgeräts von Fig. 1.
- Fig. 4: zeigt eine Vorderansicht des Grillgeräts von Fig. 1.

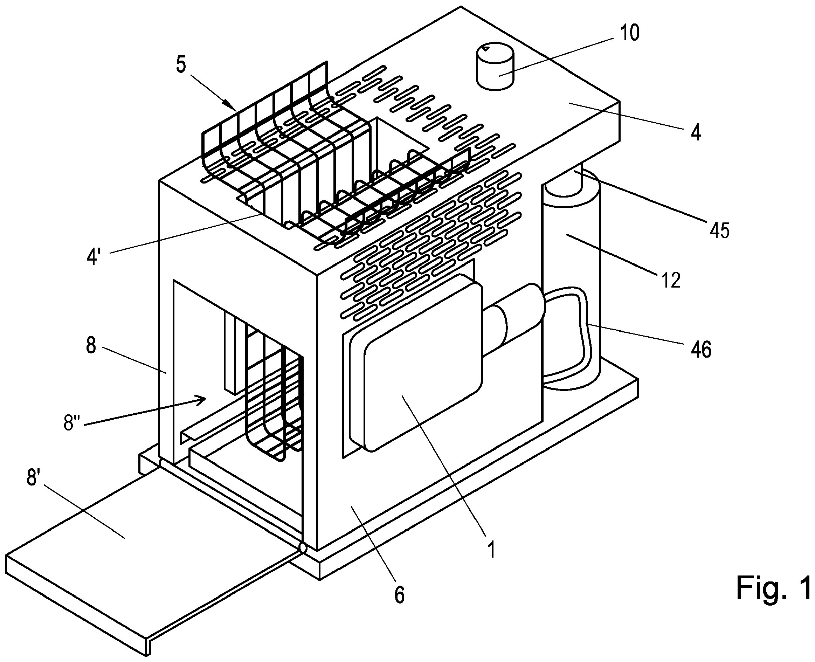

Die Figuren 1 bis 4 zeigen ein Grillgerät zum Garen und Grillen von Grillgut, umfassend ein Gehäuse, welches den Grillinnenraum begrenzt. Der Grillinnenraum weist einen vertikalen Grillbereich auf. Das Gehäuse umfasst eine erste Seitenwand 6, eine zweite Seitenwand 7, die der ersten Seitenwand 6 gegenüberliegt, eine Deckenwand 4, eine Rückwand 9 und eine Bodenplatte 3. Außerdem umfasst das Grillgerät einen Grillkorb 5, welcher vertikal in den Grillinnenraum eingebracht werden kann. Die Deckenwand 4 weist eine Öffnung 4` auf, durch welche der Grillkorb 5 in den Grillinnenraum eingebracht werden kann. Der Grillinnenraum ist von einer Sichtöffnung 8" an der Frontseite 8 und von der Öffnung 4` an der Deckenwand 4 zugänglich.

Weiters sind zwei Heizstrahler 1, 2 an der ersten bzw. zweiten Seitenwand 6, 7 des Grillinnenraums angebracht. Bei den Heizstrahlern 1, 2 handelt es sich in den Fig. 1 - 4 gezeigten Ausführungsvarianten um Gasbrenner. In den in Fig. 1 - 4 gezeigten Ausführungsvarianten sind die Heizstrahler 1, 2 in den Seitenwänden 6, 7 verbaut, das heißt, die Seitenwände 6, 7 weisen jeweils Ausnehmungen auf, in welchen die Heizstrahler 1, 2 fixiert werden können.

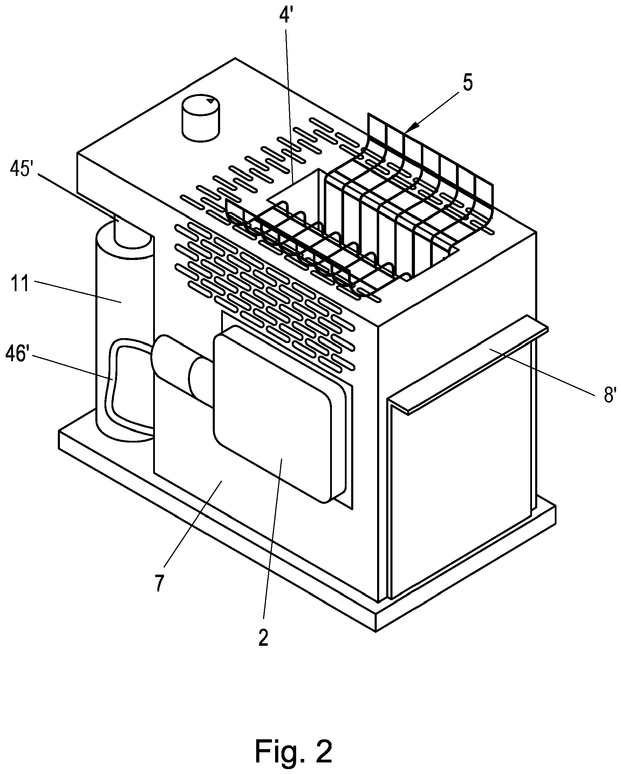

Weiters ist eine schwenkbare Frontklappe 8` vorhanden, welche im geschlossenen Zustand wie in Fig. 2 dargestellt den offenen Bereich der Frontseite 8, das heißt die Sichtöffnung 8", verschließt. Im geschlossenen Zustand kann die Frontklappe 8` mittels eines Magnetverschlusses am Gehäuse verschlossen bzw. magnetisch mit dem Gehäuse verbunden sein. Im offenen Zustand bildet die Frontklappe 8` eine Verlängerung der Bodenplatte 3. Bevorzugt ist die Frontklappe 8` mittels horizontal angeordneten Scharnieren an der Bodenplatte 3 befestigt. Die Frontklappe 8` kann einen vorstehender Griff umfassen, der eine Tiefe aufweist, die der Höhe der Drehachse der Scharniere über dem Boden entspricht. Die Frontklappe 8` kann transparent ausgeführt sein und beispielsweise eine Glas- Frontklappe 8` umfassen. Es kann die gesamte Frontklappe 8` transparent ausgeführt sein oder nur eine Sichtscheibe, welche vorzugsweise aus transparentem Kunststoff oder Glas gefertigt ist. Die Sichtscheibe ist derart im Bereich der Frontklappe 8` angeordnet, dass das Grillgut durch die Sichtscheibe beim Garen visuell begutachtet werden kann. Dadurch lässt sich das Grillgut auch bei geschlossener Frontklappe 8` im Inneren des Grillgeräts beobachten.

Unter den Heizstrahlern 1, 2 kann ein Paar im Wesentlichen horizontal ausgerichteter Führungen 6', 7` angeordnet sein. Dieses Paar an Führungen 6', 7` ist als Führungsschiene ausgebildet. Auf dem Paar Führungen 6', 7` kann ein Grillrost geführt werden.

Weiters kann die Frontseite 8 an der Oberseite eine Blende umfassen.

Wie in Fig. 1 und 2 ersichtlich, sind zwei Gaszuleitungen 46, 46` mit Anschlüssen 45, 45` für die Gaskartuschen 11, 12 vorhanden, wobei die beiden Anschlüsse 45, 45` bevorzugt an der Außenseite der Rückwand 9 unterhalb der Deckenwand 4 angeordnet sind. Die Gaszuleitungen 46, 46` können ebenfalls wie in den Fig. 1 und 2 gezeigt an der Außenseite der Rückwand bis zum jeweiligen Heizstrahler 1, 2 an der Außenseite der Seitenwände 6, 7 verlaufen. Die Gaszuleitungen 46, 46` verbinden die Anschlüsse 45, 45` somit jeweils mit einem der Heizstrahler 1, 2. Die Anschlüsse 45, 45` können ein Anschlussventil für die Gaskartuschen 11, 12 aufweisen.

Besonders bevorzugt wird die Gaszufuhr an die Heizstrahler 1, 2 durch einen Regler 10 geregelt. Der Regler 10 regelt die aus den Gaskartuschen 11, 12 durchgelassene Gasmenge zu den Heizstrahlern 1, 2. Bei dem Regler 10 kann es sich wie in den Fig. 1 - 4 dargestellt um einen Drehregler handeln, welcher an der Außenseite der Deckenwand 4 angeordnet sein kann. Zudem kann das Grillgerät noch zwei elektrische Zündvorrichtungen aufweisen, bei welchen es sich bevorzugt um Piezozündungen handelt. Der Druckknopf für die Zündung kann im Regler 10 integriert sein. Der Regler 10 lässt sich dann nicht nur drehen, sondern auch hinunterdrücken, wodurch beide Heizplatten 1, 2 bei geöffneter Gaszufuhr gezündet werden.

Die Gaskartuschen 11, 12 sind bevorzugt an der Außenseite der Rückwand 9 angeordnet. Die Gaskartuschen 11, 12 können auf der Bodenplatte 3 des Gehäuses stehen, welche bevorzugt über die Rückwand 9 hinausragt. Außerdem kann an der Außenseite der Rückwand hinter den Gaskartuschen 11, 12 eine abnehmbare Abdeckung angeordnet sein. Diese Abdeckung kann an der Rückseite des Gehäuses angeordnet sein und dient der Abdeckung der Gaskartuschen 11, 12. Die abnehmbare Abdeckung kann auch größer dimensioniert sein und zusätzlich die Seitenwände 6, 7 zum Großteil abdecken. Damit würde die Abdeckung auch die Außenseite der Heizstrahler 1, 2 sowie die Gaszuleitungen 46, 46` abdecken und schützen.

Ein weiterer wesentlicher Vorteil der Gaskartuschen 11, 12 ist ihre kleine Größe und die geringe Menge an Gas in den Kartuschen im Gegensatz zu einer Gasflasche, weshalb auch mehrere Gaskartuschen gelagert werden können. Somit muss nicht ständig kontrolliert werden, ob noch genügend Gas vorhanden ist und die Gaskartuschen 11, 12 können sehr schnell und einfach mit einer der gelagerten, vollen Gaskartuschen ausgetauscht werden. Zusätzlich bietet die Verwendung von Gaskartuschen 11, 12 neben der Flexibilität und Sicherheit eine geringere Umweltschädlichkeit. Der CO₂ -Ausstoß wird beim erfindungsgemäßen Grillgerät zusätzlich auch durch den Einsatz des Kamineffekts minimiert, da das Grillgerät sparsamer betrieben werden kann. Die um das Grillgut zirkulierende Heißluft ermöglicht ein Garen des Grillguts, während die Heizplatten nur kurz auf großer Hitze das Grillgut beidseitig scharf anbraten.

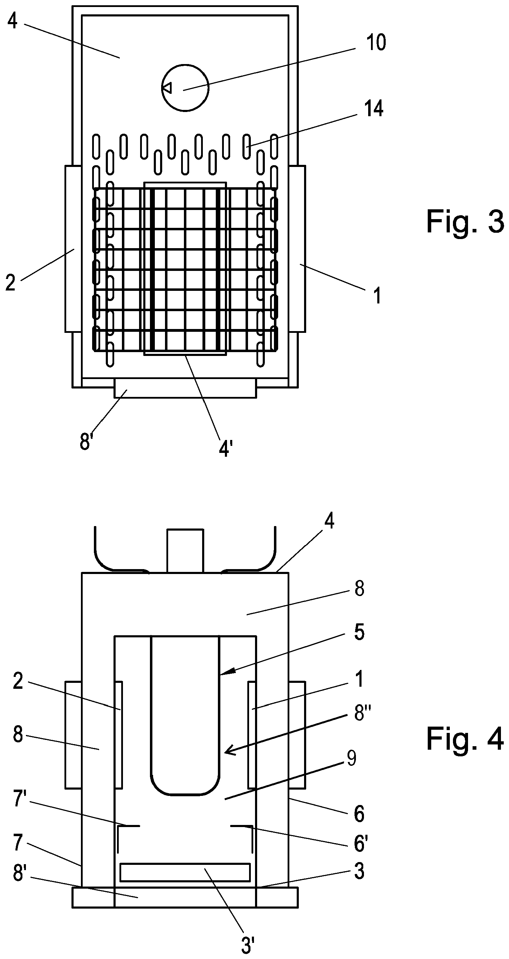

Des Weiteren kann die Breite des Grillkorbs 5 verstellbar sein. In Fig. 4 sind die Seitenwände des Grillkorbs 5 im Wesentlichen parallel angeordnet und können so relativ großes Grillgut aufnehmen. Die Breite des Grillkorbs 5 kann besonders bevorzugt an der Unterseite so verstellt werden, dass die Seitenwände des Grillkorbs 5 V-förmig angeordnet sind. Dadurch verringert sich der Abstand zwischen den Seitenwänden und somit auch das vom Grillkorb 5 aufnehmbare Volumen. Bevorzugt lässt sich der Grillkorb 5 stufenlos verstellen, um unterschiedlichstes Grillgut optimal aufnehmen zu können.

Wie in den Ausführungsvarianten in den Fig. 1, 2 und 4 dargestellt kann der Grillkorb 5 an der Oberseite eine geschweifte Form aufweisen. Bevorzugt liegt dabei ein Teil der Oberseite des Grillkorbs 5 an der Deckenwand 4 des Grillgeräts auf. Mithilfe der geschweiften Enden kann der Grillkorb 5 sehr einfach aus dem Grillgerät entnommen bzw. in das Grillgerät eingebracht werden. An der an der Deckenwand 4 aufliegenden Fläche des Grillkorbs 5 kann beispielsweise Brot erwärmt oder aufgebacken werden, während Grillgut im Grillkorb 5 im Innenraum des Grillgeräts zubereitet wird. Damit lässt sich auch die nach oben aufsteigende und durch die Öffnung 4` austretende Wärme sehr effektiv nutzen.

In einer weiteren Ausführungsvariante umfasst das Grillgerät eine herausnehmbare Abtropfschale 3 `, welche wie in den Fig. 1 und 4 gezeigt auf der Bodenplatte 3 platziert werden kann. Je nach Grillgut können während dem Grillen Säfte, Fette oder dergleichen vom im Grillkorb 5 eingebrachten Grillgut herabtropfen. Die Abtropfschale 3' ermöglicht ein Auffangen dieser Säfte und Fette, wodurch einerseits die Reinigung des Grillgeräts erleichtert wird, da die herausnehmbare Abtropfschale 3' leicht gereinigt werden kann und andererseits eine Weiterverarbeitung der Säfte und Fette zu einer Sauce oder ähnlichem.

Wie in den Fig. 1 - 3 dargestellt kann das Gehäuse mehrere Lüftungsöffnungen 14 aufweisen. Diese können an der Deckenwand 4 und an den Seitenwänden 6, 7 angebracht sein. Bei den Lüftungsöffnungen 14 kann es sich um schlitzförmige Ausnehmungen handeln. Durch diese Lüftungsöffnungen 14 kann warme bzw. heiße Luft entweichen, um den Kamineffekt zu unterstützen. Außerdem können durch die Lüftungsöffnungen 14 auch Verbrennungsgase, Qualm und Rauch entweichen, welche sich sonst im Innenraum des Grillgeräts ansammeln würden. Durch die Lüftungsöffnungen 14 an der Unterseite des Grillgeräts strömt zur Ermöglichung des Kamineffekts auch bei geschlossener Frontklappe 8` Frischluft in den Grillinnenraum.

## Patentansprüche

1. Grillgerät zum Garen und Grillen von Grillgut, umfassend
• ein Gehäuse, welches den Grillinnenraum begrenzt und eine erste Seitenwand (6), eine zweite Seitenwand (7), die der ersten Seitenwand gegenüberliegt, eine Deckenwand (4), eine Rückwand (9) und eine Bodenplatte (3) aufweist, wobei der Grillinnenraum einen vertikalen Grillbereich aufweist,
• zumindest zwei Heizstrahler (1, 2), welche gegenüberliegend an der ersten und zweiten Seitenwand (6, 7) im Grillinnenraum eingebracht sind, wobei die Heizstrahler (1, 2) vorzugsweise Gasbrenner sind,
• einen Grillkorb (5), welcher vertikal zwischen den beiden Heizstrahlern (1, 2) einbringbar ist,
wobei die Deckenwand (4) eine Öffnung (4') aufweist, durch welche der Grillkorb (5) in den Grillinnenraum einbringbar ist, **dadurch gekennzeichnet, dass** die Frontseite (8) des Grillgeräts eine Sichtöffnung (8") umfasst.

2. Grillgerät nach Anspruch 1, **dadurch gekennzeichnet, dass** die Breite des Grillkorbs (5) verstellbar ist.

3. Grillgerät nach einem der Ansprüche 1 oder 2, wobei der Grillkorb (5) eine nach oben geschweifte V-Form aufweist.

4. Grillgerät nach einem der Ansprüche 1 bis 3, **gekennzeichnet durch** eine schwenkbare Frontklappe (8`), wobei mit der Frontklappe (8') die Sichtöffnung (8") verschließbar ist.

5. Grillgerät nach Anspruch 4, wobei die Frontklappe (8') eine Sichtscheibe aus vorzugsweise transparentem Kunststoff oder Glas umfasst.

6. Grillgerät nach einem der Ansprüche 4 oder 5, **dadurch gekennzeichnet, dass** die Frontklappe (8') im geöffnete Zustand eine Verlängerung der Bodenplatte (3) bildet.

7. Grillgerät nach einem der Ansprüche 1 bis 6, **gekennzeichnet durch** eine herausnehmbare Abtropfschale (3'), wobei die Abtropfschale (3') auf der Bodenplatte (3) platzierbar ist.

8. Grillgerät nach einem der Ansprüche 1 bis 7, **gekennzeichnet durch** ein Paar im Wesentlichen horizontal ausgerichteter Führungen (6', 7'), welche an der ersten und zweiten Seitenwand (6, 7) jeweils auf gleicher Höhe unterhalb der Heizstrahler (1, 2) angeordnet sind.

9. Grillgerät nach einem der Ansprüche 1 bis 8 **dadurch gekennzeichnet, dass** die Heizstrahler (1, 2) Gasbrenner sind, welche jeweils mit einer Gaszuleitung (46, 46`) verbunden sind, wobei jede Gaszuleitung (46, 46')) einen Anschluss für eine Gaskartusche (11, 12) aufweist, wobei die Gaskartuschen (11, 12) an der Außenseite der Rückwand (9) des Gehäuses anordenbar sind.

10. Grillgerät nach Anspruch 9, **dadurch gekennzeichnet, dass** die Gaszufuhr an die Heizstrahler (1, 2) durch einen Regler (10) regelbar ist, wobei der Regler (10) die aus den Gaskartuschen (11, 12) durchgelassene Gasmenge zu den Heizstrahlern (1, 2) regelt.

11. Grillgerät nach Anspruch 9 oder Anspruch 10, **gekennzeichnet durch** eine abnehmbare Abdeckung des Gehäuses an der Rückseite des Grillgeräts, wobei zwischen Rückwand (9) und Abdeckung die Gaskartuschen (11, 12) anordenbar sind.

12. Grillgerät nach einem der Ansprüche 1 bis 11, **gekennzeichnet durch** zwei elektrische Zündvorrichtungen, wobei die Zündvorrichtungen vorzugsweise Piezozündungen sind.

13. Grillgerät nach einem der Ansprüche 1 bis 12, **dadurch gekennzeichnet, dass** das Gehäuse Lüftungsöffnungen (14) aufweist.

14. Grillgerät nach einem der Ansprüche 1 bis 13, **gekennzeichnet durch** einen integrierten Zeitschalter, wobei der Zeitschalter die Heizstrahler (1, 2) aktiviert bzw. deaktiviert.

15. Grillgerät nach einem der Ansprüche 1 bis 14, **gekennzeichnet durch** zumindest ein lösbar fixierbares Brenneisen.

## Claims

1. Grilling apparatus for cooking and grilling food to be grilled, comprising
• a housing which delimits the grill interior and has a first side wall (6), a second side wall (7) opposite the first side wall, a top wall (4), a rear wall (9) and a bottom plate (3), the grill interior having a vertical grilling area,
• at least two radiant heaters (1, 2), which are placed opposite one another on the first and second side walls (6, 7) in the grill interior, the radiant heaters (1, 2) preferably being gas burners,
• a grill basket (5), which can be introduced vertically between the two radiant heaters (1, 2),
wherein the top wall (4) has an opening (4') through which the grill basket (5) can be introduced into the grill interior, **characterized in that** the front side (8) of the grilling apparatus comprises a viewing opening (8").

2. Grilling device according to claim 1, **characterized in that** the width of the grilling basket (5) is adjustable.

3. Grilling device according to any one of claims 1 or 2, wherein the grilling basket (5) has an upwardly sloping V-shape.

4. Grilling device according to any one of claims 1 to 3, **characterized by** a pivotable front flap (8'), wherein the viewing opening (8") is closable with the front flap (8').

5. Grilling device according to claim 4, wherein the front flap (8') comprises a viewing panel preferably made of transparent plastic or glass.

6. Grilling device according to any one of claims 4 or 5, **characterized in that** the front flap (8') in its open state forms an extension of the base plate (3).

7. Grilling device according to any one of claims 1 to 6, **characterized by** a removable drip tray (3'), wherein the drip tray (3') is placeable on the base plate (3).

8. Grilling device according to any one of claims 1 to 7, **characterized by** a pair of essentially horizontally aligned guides (6', 7'), which are arranged on the first and second side walls (6, 7) at the same height below the radiant heaters (1, 2).

9. Grilling device according to any one of claims 1 to 8, **characterized in that** the radiant heaters (1, 2) are gas burners, which are each connected to a gas supply line (46, 46'), each gas supply line (46, 46') having a connection for a gas cartridge (11, 12), wherein the gas cartridges (11, 12) can be arranged on the outside of the rear wall (9) of the housing.

10. Grilling device according to claim 9, **characterized in that** the gas supply to the radiant heaters (1, 2) can be regulated by a regulator (10), wherein the regulator (10) regulates the amount of gas passing from the gas cartridges (11, 12) to the radiant heaters (1, 2).

11. Grilling device according to claim 9 or claim 10, **characterized by** a removable cover for the housing at the rear of the grilling device, wherein the gas cartridges (11, 12) are arrangeable between the rear wall (9) and the cover.

12. Grilling device according to any one of claims 1 to 11, **characterized by** two electrical ignition devices, wherein the ignition devices are preferably piezoelectric ignitions.

13. Grilling device according to any one of claims 1 to 12, **characterized in that** the housing has ventilation openings (14).

14. Grilling device according to any one of claims 1 to 13, **characterized by** an integrated timer, wherein the timer activates or deactivates the radiant heaters (1, 2).

15. Grilling device according to any one of claims 1 to 14, **characterized by** at least one branding iron that can be secured in a detachable manner.

## Revendications

1. Rôtissoire pour cuire et rôtir des aliments à rôtir, comprenant
• une enveloppe qui délimite l'espace intérieur de rôtissage et présente une première paroi latérale (6), une deuxième paroi latérale (7) qui fait face à la première paroi latérale, une paroi de recouvrement (4), une paroi arrière (9) et une plaque de fond (3), l'espace intérieur de rôtissage présentant une zone de rôtissage,
• au moins deux dispositifs de chauffage radiants (1, 2) qui sont insérés face à la première et à la deuxième paroi latérale (6, 7) dans l'espace intérieur de rôtissage, les dispositifs de chauffage radiants (1, 2) étant de préférence des brûleurs à gaz, et
• une corbeille de rôtissage (5) qui peut être insérée verticalement entre les deux dispositifs de chauffage radiants (1, 2),
dans laquelle la paroi de recouvrement (4) présente une ouverture (4') à travers laquelle la corbeille de rôtissage (5) qui peut être insérée dans l'espace intérieur de rôtissage, **caractérisée en ce que** la face avant (8) de la rôtissoire comprend un regard (8").

2. Rôtissoire selon la revendication 1, **caractérisée en ce que** la largeur de la corbeille de rôtissage (5) est réglable.

3. Rôtissoire selon la revendication 1 ou 2, **caractérisée en ce que** la corbeille de rôtissage (5) présente une forme de V cintrée vers le haut.

4. Rôtissoire selon une des revendications 1 à 3, **caractérisée par** un volet avant pivotant (8'), le regard (8") pouvant être obturé par le volet avant (8').

5. Rôtissoire selon la revendication 4, dans laquelle le volet avant (8') comprend une vitre d'observation en plastique ou en verre de préférence transparent.

6. Rôtissoire selon une des revendications 4 ou 5, **caractérisée en ce que** le volet avant (8') en position ouverte forme un prolongement de la plaque de fond.

7. Rôtissoire selon une des revendications 1 à 6, **caractérisée par** un bac d'égouttement démontable (3'), lequel bac d'égouttement (3') peut être placé sur la plaque de fond (3).

8. Rôtissoire selon une des revendications 1 à 7, **caractérisée par** une paire de glissières (6', 7') qui sont disposées sur la première et la deuxième paroi latérale (6, 7), respectivement à la même hauteur au-dessous des dispositifs de chauffage radiants (1, 2).

9. Rôtissoire selon une des revendications 1 à 8, **caractérisée en ce que** les dispositifs de chauffage radiants (1, 2) sont des brûleurs à gaz (12) qui sont reliés chacun à une conduite d'amenée de gaz (46, 46'), chaque conduite d'amenée de gaz (46, 46') présentant une connexion pour une cartouche de gaz (11, 12), lesquelles cartouches de gaz (11, 12) peuvent être agencées sur la face extérieure de la paroi arrière (9) de l'enveloppe.

10. Rôtissoire selon la revendication 9, **caractérisée en ce que** l'alimentation en gaz des dispositifs de chauffage radiants (1, 2) peuvent être régulées par un régulateur (10), lequel régulateur (10) régule la quantité de gaz transmise par les cartouches de gaz (11, 12) aux dispositifs de chauffage radiants (1, 2).

11. Rôtissoire selon la revendication 9 ou 10, **caractérisée par** un capot amovible de l'enveloppe sur la face arrière de la rôtissoire, les cartouches de gaz (11, 12) pouvant être agencées entre la paroi arrière (9) et le capot.

12. Rôtissoire selon une des revendications 1 à 11, **caractérisée par** deux dispositifs d'allumage électriques, lesquels dispositifs d'allumage sont de préférence des allumages piézoélectriques.

13. Rôtissoire selon une des revendications 1 à 12, **caractérisée en ce que** l'enveloppe présente des orifices d'aération (14).

14. Rôtissoire selon une des revendications 1 à 13, **caractérisée par** un minuteur intégré, lequel minuteur active et désactive les dispositifs de chauffage radiants (1, 2).

15. Rôtissoire selon une des revendications 1 à 14, **caractérisée par** au moins un fer à marquer fixable détachable.
